Europäisches Patentamt

(19) European Patent Office

Office européen des brevets

(11) Numéro de publication: **0 061 125**
**B1**

(12) **FASCICULE DE BREVET EUROPEEN**

(45) Date de publication du fascicule du brevet:
09.04.86

(51) Int. Cl.⁴: **C 08 L 23/04**, C 08 K 5/00,
H 01 B 3/44

(21) Numéro de dépôt: 82102114.4

(22) Date de dépôt: 16.03.82

(54) Matériau polymère ignifuge.

(30) Priorité: 19.03.81 FR 8105491

(43) Date de publication de la demande:
29.09.82 Bulletin 82/39

(45) Mention de la délivrance du brevet:
09.04.86 Bulletin 86/15

(84) Etats contractants désignés:
BE CH DE FR GB IT LI NL SE

(56) Documents cités:
EP - A - 0 007 748
DE - A - 2 507 289
FR - A - 2 109 779
GB - A - 2 041 960
US - A - 3 856 890
US - A - 4 247 446

Le dossier contient des informations techniques
présentées postérieurement au dépôt de la demande et
ne figurant pas dans le présent fascicule.

(73) Titulaire: **LES CABLES DE LYON Société anonyme dite:,**
170 quai de Clichy, F-92111 Clichy Cedex (FR)

(72) Inventeur: **Bonicel, Jean-Pierre, 304, rue Garibaldi,
F-69007 Lyon (FR)**
Inventeur: **Prigent, Madeleine, 10, allée des Fraises,
F-91460 Marcoussis (FR)**
Inventeur: **Cottevieille, Christian, 187, rue de Paris,
F-93100 Montreuil (FR)**

(74) Mandataire: **Weinmiller, Jürgen et al, Zeppelinstrasse 63,
D-8000 München 80 (DE)**

**Description**

La présente invention concerne un matériau polymère ignifugé comprenant:

a) une matrice polymère contenant du polyéthylène et un copolymère d'éthylène et d'acrylate d'alkyle,

b) de 25% à 35% en poids, rapportés au poids de matrice polymère, d'un additif organique bromé,

c) de 8 à 17% en poids, rapportés au poids de matrice polymère, d'oxyde d'antimoine,

d) de 2 à 5000 parties par million, rapportées au poids de matrice polymère, d'un antioxydant.

Le document US—A—4247446 décrit un matériau polymère ignifugé à base d'une polyoléfine réticulée comprenant du polyéthylène et un copolymère d'éthylène et d'un autre composé polymérisable, notamment un acrylate d'alkyle, ainsi que du décabromidiphényléther et de l'oxyde d'antimoine.

Le document DE—A—2 507 289 décrit dans son exemple 10 un matériau polymère ignifugé contenant 100 parties de polyéthylène basse densité, 10 parties de copolymère éthylène-acrylate d'éthyle, 7,5 parties d'hexabromobiphényle et 2,5 parties de sesquioxyde d'antimoine.

Le document GB—A—2041960 décrit un matériau polymère ignifugé comprenant du polyéthylène, un copolymère d'éthylène et d'un autre composé polymérisable, tel que l'acrylate d'éthyle, une poudre d'un oxyde métallique hydraté tel que l'alumine hydratée, et un agent de couplage formé par un titanate organique, notamment l'isopropyl-tri (dioctylphosphato) titanate ou l'isopropyl-tri (dioctylpyrophosphato) titanate, destiné à améliorer son extensibilité.

Les polymères durcis par réticulation selon le document US—A—4247446 présentent une élasticité très inférieure à celle des polymères élastomériques et une souplesse insuffisante. Ils sont par ailleurs plus coûteux et plus difficiles de mise en oeuvre, notamment pour la fabrication de gaines de câbles électriques, que les polymères non réticulés. Ceux selon le document DE—A—2 507 289 présentent des indices d'oxygène limite trop bas. Ceux selon le document GB—A—2041960 comportent une proportion très élevée d'oxyde métallique hydraté, qui les rend impropres à la fabrication de gaines de câbles électriques par extrusion dans des conditions industrielles.

La présente invention a pour but de procurer un matériau polymère présentant une bonne élasticité et une bonne souplesse, peu coûteux et facile à mettre en oeuvre, notamment par extrusion, tout en présentant une résistance au feu aussi satisfaisante qui celle des matériaux connus.

Le matériau polymère ignifugé selon l'invention est caractérisé en ce que la matrice polymère est un mélange non réticulé de 40 à 60% en poids de polyéthylène et 40 à 60% en poids de copolymère d'éthylène et d'acrylate d'alkyle, et en ce qu'il comprend en outre de 0,1 à 0,5% en poids, rapportés au poids de matrice polymère, d'un titanate organique contenant un radical phosphate ou pyrophosphate.

Ce titanate est avantageusement l'isopropyltri-(dioctyl pyrophosphato) titanate.

Il est décrit ci-après à titre d'exemple un matériau polymère selon l'invention (exemple IV) et leurs propriétés de résistance au feu et mécaniques, ainsi qu'à titre de comparaison celles de matériaux ne répondant pas à la présente invention (exemples I, II et III).

Pour la préparation des matériaux selon l'invention, on mélange à chaud 50 parties en poids de polyéthylène et 50 parties de copolymère d'éthylène et d'acrylate d'éthyle. On lui ajoute 30 parties en poids de décabromodiphényloxyde, 15 parties en poids d'oxyde d'antimoine $Sb_2O_3$ et 5000 parties par million d'un antioxydant (par exemple l'un des dérivés phénoliques commercialisés sous les désignations Irganox 10—10 ou 10—76 par la société Ciba-Geigy), et poursuit le malaxage jusqu'à obtenir un produit homogène (exemple III). Puis on prépare un produit analogue, mais auquel on a ajouté 0,3 parties en poids d'isopropyl-tri (dioctylpyrophosphato) titanate (exemple IV). On mesure leurs résistances à l'inflammation et leurs propriétés mécaniques, et à titre de comparaison celles de polyéthylène pur (exemple I) et de copolymère éthylène-acrylate d'éthyle pur (exemple II), additionnés des mêmes proportions de décabromodiphényloxyde et d'oxyde d'antimoine.

La résistance à l'inflammation a été mesurée par les deux essais suivants:

On mesure en premier lieu l'indice d'oxygène limite (IOL), défini comme la teneur en oxygène minimale, dans un mélange oxygène-azote, entretenant la combustion d'un de barreau matériau disposé verticalement et allumé à sa partie supérieure (norme américaine ASTMD-2863 de 1970).

On effectue ensuite l'essai UL94, consistant à enflammer à l'air par 2 fois pendant 10 secondes une éprouvette d'épaisseur 3 mm, et à vérifier qu'elle s'éteint rapidement.

Au titre des propriétés mécaniques, on a mesuré la résistance à la rupture et l'allongement à la rupture.

Les mesures ont donné les résultats suivants en fonction de la composition des mélanges

## 0 061 125

| Exemple | Art antérieur | | Invention | |
|---|---|---|---|---|
| | I | II | III | IV |
| Polyéthylène | 100 | 0 | 50 | 50 |
| Copolymère éthylène-acrylate d'éthyle | 0 | 100 | 50 | 50 |
| décabromodiphényloxyde | 30 | 30 | 30 | 30 |
| $Sb_2O_3$ | 15 | 15 | 15 | 15 |
| titanate | | | | 0,3 |
| antioxydant phénolique | 0,05 | 0,05 | 0,05 | 0,05 |
| IOL | 24,7 | 26,3 | 27 | 27,5 |
| UL-94 | mauvais | mauvais | mauvais | bon |
| Résistance à la rupture (bars) | 102,5 | 138,6 | 122 | 148 |
| Allongement à la rupture % | 430 | 706 | 530 | 600 |

On voit que le composé selon l'invention de la dernière colonne présente une nette supériorité au point de vue résistance à l'inflammation sur les composés à base de polyéthylène ou de copolymère-éthylène acrylate d'éthyle purs ou mixtes, des trois premières colonnes.

Ils présentent par ailleurs une agressivité chimique après combustion faible, et un maintien satisfaisant de leurs propriétés mécaniques après vieillissement de 5 jours à 100°C.

Bien que les matériaux selon l'invention qui viennent d'être décrits ci-dessus paraissent préférables, on comprendra que diverses modifications peuvent leur être apportées sans sortir de son cadre. En particulier, le décabromodiphényloxyde peut être remplacé par l'octabromodiphényle ou l'hexabromodiphényle. L'isopropyl-tri (dioctylpyrophosphato) titanate peut être remplacé par l'isopropyl-tri (dioctylphosphato)titanate, le di (dioctyl-pyrophosphato) éthylène-titanate, le di(dioctyl phosphato) éthylènetitanate, le di(dioctylpyrophosphato) oxyacétate de titante, le di(dioctylphosphato) oxyacétate de titane ou le tri (butyl, octyl, pyrophosphato) éthylène titanate.

En outre, on peut incorporer au matériau des additifs destinés à lui conférer des propriétés particulières.

Le matériau de l'invention convient particulièrement pour le gainage de câbles électriques, notamment de câbles téléphoniques.

**Revendications**

1. Matériau polymère ignifugé, comprenant
a) une matrice polymère contenant du polyéthylène et un copolymère d'éthylène et d'acrylate d'alkyle,
b) de 25 à 35% en poids, rapportés au poids de matrice polymère, d'un additif organique bromé,
c) de 8 à 17% en poids, rapportés au poids de matrice polymère, d'oxyde d'antimoine,
d) de 2 à 5000 parties par million, rapportées au poids de matrice polymère, d'un antioxydant, caractérisé en ce que la matrice polymère est un mélange non réticulé de 40 à 60% en poids de polyéthylène et 40 à 60% de copolymère d'éthylène et d'acrylate d'alkyle, et en ce qu'il comprend en outre de 0,1 à 0,5% en poids, rapportés au poids de matrice polymère, d'un titanate organique contenant un radical phosphate ou pyrophosphate.

2. Matériau polymère selon la revendication 1, caractérisé en ce que le titanate organique est l'isopropyl-tri (dioctylpyrophosphato) titanate.

**Patentansprüche**

1. Feuerhemmendes Polymermaterial mit
a) einer Polymermatrix, die Polyethlen und ein Äthylen- und Alkylacrylatcopolymer enthält,
b) 25 bis 35 Gew.%, bezogen auf das Gewicht der Polymermatrix, eines organisches bromierten Zusatzes,
c) 8 bis 17 Gew.%, bezogen auf das Gewicht der Polymermatrix, von Antimonoxid,
d) 2 bis 5000 Teile ppm, bezogen auf das Gewicht der Polymermatrix, eines Antioxydationsmittels, dadurch gekennzeichnet, daß die Polymermatrix eine nicht vernetzte Mischung aus 40 bis 60 Gew.% Polyäthylen und 40 bis 60 Gew.% Äthylen- und Alkylacrylatcopolymer ist und daß sie außerdem 0,1 bis 0,5

3

**0 061 125**

Gew.%, bezogen auf das Gewicht der Polymermatrix, eines organischen Titanats mit einem Phosphat- oder Pyrophosphatradikal aufweist.

2. Polymermaterial nach Anspruch 1, dadurch gekennzeichnet, das das organische Titanat Isopropyl - tri(dioctylpyrophosphato) - titanat ist.

**Claims**

1. A fireproof material comprising
a) a polymer matrix containing polyethylene and a copolymer of ethylene and of alkyl acrylate,
b) 25 to 35% by weight, related to the weight of the polymer matrix, of an organic brominated additive,
c) 8 to 17% by weight, related to the weight of the polymer matrix, of antimon oxide,
d) 2 to 5000 ppm, related to the weight of the polymer matrix, of an antioxidant,
characterized in that the polymer matrix is a non-reticulated mixture of 40 to 60% by weight of polyethylene and 40 to 60% by weight of copolymer of ethylene and of alkyl acrylate, and in that it further comprises 0,1 to 0,5% by weight, related to the weight of the polymer matrix, of an organic titanate containing a phosphate or pyrophosphate radical.

2. A polymer material according to claim 1, characterized in that the organic titanate is isopropyl-tri(dioctylpyrophosphato) titanate.

4